(19) Europäisches Patentamt
European Patent Office
Office européen des brevets

(11) **EP 2 434 184 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(51) Int Cl.:
***F16H 61/02*** *(2006.01)*

(21) Anmeldenummer: **11176386.8**

(22) Anmeldetag: **03.08.2011**

(54) **Verfahren zur Bestimmung eines Gangsprungs für eine Schaltung**

Method for determining a gear jump for a shift

Procédé de détermination d'un saut de rapport dans la commutation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2010 DE 102010041188**

(43) Veröffentlichungstag der Anmeldung:
**28.03.2012 Patentblatt 2012/13**

(73) Patentinhaber: **ZF Friedrichshafen AG 88038 Friedrichshafen (DE)**

(72) Erfinder:
• **Würthner, Maik 88677 Markdorf (DE)**
• **Staudinger, Joachim 88214 Ravensburg (DE)**
• **Kemler, Johannes 88212 Ravensburg (DE)**

(56) Entgegenhaltungen:
**DE-A1-102005 052 824 US-B1- 6 272 415**

EP 2 434 184 B1

## Beschreibung

Die Erfindung betrifft ein Verfahren zur Bestimmung eines Gangsprungs für eine Schaltung eines mehrgängigen, automatischen bzw. automatisierten Schaltgetriebes eines Kraftfahrzeugs.

In automatisierten bzw. automatischen Schaltgetrieben werden Schaltungen bzw. Gangwechsel von einem Ist-Gang in einen Soll-Gang entweder über eine Gangstufe hinweg oder über mehrere Gangstufen hinweg ausgeführt. Die Anzahl der zwischen einem Ist-Gang und einem Ziel-Gang einer auszuführenden Schaltung liegenden Gangstufen bzw. Gänge bestimmt die Größe des Gangsprungs einer auszuführenden Schaltung.

US 6 272 415 B offenbart ein Verfahren zur Bestimmung eines Gangsprungs für eine Schaltung eines mehrgängigen, automatischen Schaltgetriebes eines Kraftfahrzeugs, nämlich zur Bestimmung der Größe eines Gangsprungs von einem Ist-Gang in einen Ziel-Gang, wobei für jeden Ist-Gang und für jeden möglichen Gangsprung des jeweiligen Ist-Gangs wird ein Grenzwert einer Beschleunigung des dem jeweiligen Ist-Gang und dem jeweiligen Gangsprung entsprechenden Ziel-Gangs hinterlegt.

Aus der DE 10 2005 052 824 A1 ist es bereits grundsätzlich bekannt, eine Schaltung von einem Ist-Gang in einen Ziel-Gang über mehrere Gangstufen hinweg auszuführen, und zwar entweder als Direktschaltung in einem Schritt oder als Kombination mit mehreren zeitlich nacheinander ablaufender Schaltungen. Somit sind zwar Schaltungen mit unterschiedlich großen Gangsprüngen grundsätzlich bekannt, die konkrete Auswahl bzw. Bestimmung eines Gangsprungs, also die Bestimmung der Größe eines Gangsprungs von einem Ist-Gang in einen Ziel-Gang, bleibt jedoch nach diesem Stand der Technik offen.

Zur Bestimmung eines Gangsprungs, nämlich zur Bestimmung eines Gangsprungs von einem Ist-Gang in einen Ziel-Gang, wird nach der Praxis so vorgegangen, dass über ein Kennfeld die Größe des Gangsprungs abhängig von einem Fahrwiderstand des Kraftfahrzeugs bestimmt wird. Der Fahrwiderstand des Kraftfahrzeugs kann dabei rechnerisch oder messtechnisch ermittelt werden. Nach der Praxis wird dann, wenn für einen aktuellen Ist-Gang und einen aktuellen Fahrwiderstand auf Grundlage eines Kennfelds ein geeigneter Gangsprung ermittelt wurde, derselbe dann ausgeführt, wenn eine sogenannte Schaltdrehzahl erreicht wird.

Diese aus der Praxis bekannte Vorgehensweise zur Bestimmung der Größe eines Gangsprungs, die abhängig vom aktuellen Ist-Gang sowie abhängig vom aktuellen Fahrwiderstand kennfeldabhängig vorgenommen wird, verfügt über den Nachteil, dass für unterschiedliche Abtriebsaggregate unterschiedliche Kennfelder bereitgehalten werden müssen. So kann ein Kennfeld eines Antriebsaggregats nicht ohne weiteres auf ein anderes Antriebsaggregat mit einer anderen Leistung übertragen werden. Hierdurch steigt der Abstimmungsaufwand für Getriebe, die in Kombination mit unterschiedlichen Antriebsaggregaten zum Einsatz kommen können.

Hiervon ausgehend liegt der vorliegenden Erfindung das Problem zu Grunde, ein neuartiges Verfahren zur Bestimmung eines Gangsprungs für eine Schaltung eines mehrgängigen, automatischen bzw. automatisierten Schaltgetriebes eines Kraftfahrzeugs zu schaffen.

Dieses Problem wird durch ein Verfahren gemäß Anspruch 1 gelöst. Das erfindungsgemäße Verfahren umfasst zumindest die folgenden Schritte: a) für jeden Ist-Gang und für jeden möglichen Gangsprung des jeweiligen Ist-Gangs wird ein Grenzwert einer Beschleunigung oder einer Verzögerung des dem jeweiligen Ist-Gang und dem jeweiligen Gangsprung entsprechenden Ziel-Gangs hinterlegt; b) für den aktuellen Ist-Gang wird ausgehend vom kleinsten Gangsprung in einer Schleife unter sukzessiver Erhöhung des Gangsprungs abhängig von der aktuellen Fahrsituation des Kraftfahrzeugs und abhängig von Kenngrößen des Kraftfahrzeugs die sich unter Verwendung des jeweiligen Gangsprungs im jeweiligen Ziel-Gang theoretisch einstellende Beschleunigung oder Verzögerung ermittelt und mit dem jeweiligen hinterlegten Grenzwert verglichen, und zwar solange, bis die sich beim jeweiligen Gangsprung theoretisch einstellende Beschleunigung oder Verzögerung den für denselben hinterlegten Grenzwert nicht mehr verletzt, wobei dann dieser Gangsprung für eine Schaltung ausgewählt wird.

Die hier vorliegende Erfindung schlägt ein völlig neuartiges Verfahren zur Bestimmung der Größe eines Gangsprungs von einem Ist-Gang in einen Ziel-Gang eines automatischen bzw. automatisierten Schaltgetriebes vor. Da beim erfindungsgemäßen Verfahren die von einem Antriebsaggregat bereitstellbare Leistung berücksichtigt wird, kann auf die nach der Praxis erforderliche Neuabstimmung einer Kennlinie an unterschiedliche Antriebsaggregate verzichtet werden.

Vorzugsweise wird die sich ausgehend vom Ist-Gang unter Verwendung des jeweiligen Gangsprungs im jeweiligen Ziel-Gang theoretisch einstellende Beschleunigung oder theoretisch einstellende Verzögerung aus einer berechneten Zugkraft oder berechneten Schubkraft des Ziel-Gangs des jeweiligen Gangsprungs, aus einem aktuellen Fahrwiderstand des Kraftfahrzeugs und einer aktuellen Masse des Kraftfahrzeugs errechnet, wobei die Zugkraft oder Schubkraft des Ziel-Gangs des jeweiligen Gangsprungs aus einem maximal verfügbaren Zugmoment eines Antriebsaggregats oder einem maximal verfügbaren Schubmoment des Antriebsaggregats und/oder eines Retarders, vorzugsweise unter Berücksichtigung eine Übersetzung des Ziel-Gangs des jeweiligen Gangsprungs und einer Achsübersetzung des Kraftfahrzeugs und eines Reifenradius des Kraftfahrzeugs, errechnet wird.

Nach einer vorteilhaften Weiterbildung der Erfindung wird das maximal verfügbare Zugmoment eines Antriebsaggregats oder das maximal verfügbare Schubmoment des Antriebsaggregats abhängig von einer Ziel-Drehzahl des Ziel-Gangs des jeweiligen Gangsprungs und abhängig von einer Zuglastkennlinie oder Schublastkennlinie des Antriebsaggregats ermittelt, wobei die Ziel-Drehzahl des Ziel-Gangs des jeweiligen Gangsprungs vorzugsweise aus einer aktuellen Drehzahl des Antriebsaggregats im Ist-Gang, aus einer Übersetzung des Ist-Gangs, aus dem jeweiligen Gangsprung und einem berechneten Drehzahlverlust während der Schaltung errechnet wird.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

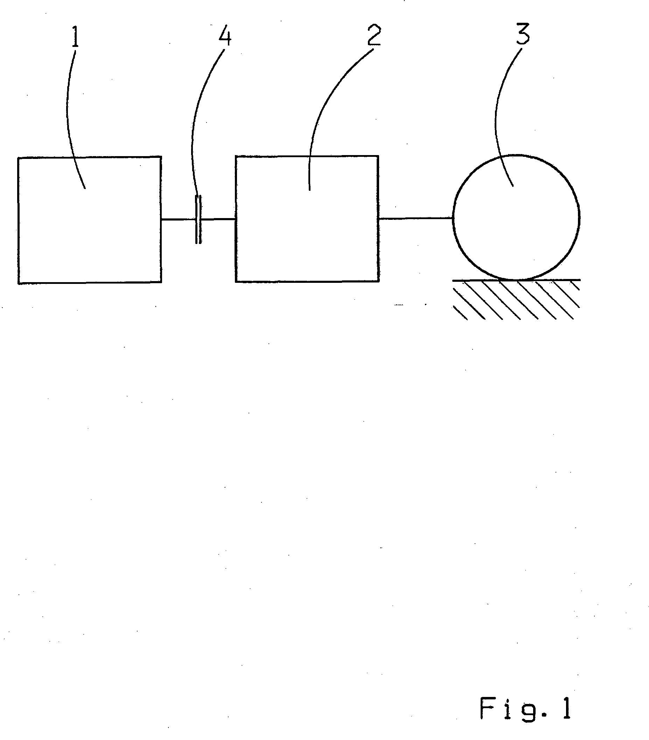

Fig. 1    ein Schema eines Antriebsstrangs eines Kraftfahrzeugs, bei welchem das erfindungsgemäße Verfahren einsetzbar ist.

Die hier vorliegende Erfindung betrifft ein Verfahren zur Bestimmung eines Gangsprungs für eine Schaltung eines mehrgängigen, automatischen bzw. automatisierten Schaltgetriebes eines Kraftfahrzeugs, nämlich zur Bestimmung der Größe eines Gangsprungs von einem Ist-Gang in einen Ziel-Gang.

Fig. 1 zeigt stark schematisiert ein Antriebsstrangschema eines Kraftfahrzeugs, bei welchem das erfindungsgemäße Verfahren zum Einsatz kommen kann, wobei der Antriebsstrang der Fig. 1 ein Antriebsaggregat 1, ein Getriebe 2 und einen Abtrieb 3 umfasst. Das Getriebe 2 ist zwischen das Antriebsaggregat 1 und den Abtrieb 3 geschaltet. Beim Getriebe 2 handelt es sich um ein automatisches bzw. automatisiertes Schaltgetriebe. Zwischen das Antriebsaggregat 1 und das automatisierte bzw. automatische Schaltgetriebe 2 ist beim Antriebsstrang der Fig. 1 eine Kupplung 4 geschaltet. Dann, wenn die Kupplung 4 geschlossen ist, ist das Antriebsaggregat 1 über das Getriebe 2 an den Abtrieb 3 gekoppelt. Wie bereits ausgeführt, handelt es sich beim Getriebe 2 um ein automatisches bzw. automatisiertes, mehrgängiges Schaltgetriebe mit mehreren Gängen, so zum Beispiel mit sechs Gängen oder acht Gängen oder auch 16 Gängen. Soll in einem solchen Getriebe 2 eine Schaltung bzw. ein Gangwechseln von einem Ist-Gang in einen Ziel-Gang ausgeführt werden, so wird die Größe des Gangsprungs von einer in Fig. 1 nicht gezeigten Steuerungseinrichtung, insbesondere einer Getriebesteuerungseinrichtung des Getriebes 2, automatisch ermittelt.

Die hier vorliegende Erfindung betrifft nun ein Verfahren, mithilfe dessen die Größe eines Gangsprungs von einem Ist-Gang in einen Ziel-Gang einer auszuführenden Schaltung besonders vorteilhaft automatisch ermittelt werden kann.

Nach der Erfindung wird für jeden Ist-Gang und für jeden möglichen Gangsprung des jeweiligen Ist-Gangs in einen möglichen Ziel-Gang ein Grenzwert einer Beschleunigung oder einer Verzögerung des dem jeweiligen Ist-Gang und dem jeweiligen Gangsprung entsprechenden Ziel-Gangs hinterlegt.

Die nachfolgende Tabelle zeigt dies exemplarisch für ein automatisiertes bzw. automatisches Schaltgetriebe mit acht Vorwärtsgängen, wobei im in der Tabelle gezeigten Beispiel für jeden der acht Gänge prinzipiell ein Gangsprung von bis zu vier Gängen möglich ist.

Bei einer Rückschaltung bedeutet ein Gangsprung 1 im Ist-Gang 6 einen Gangwechsel in den Ziel-Gang 5. Ein Gangsprung 2 im Ist-Gang 6 bedeutet bei einer Rückschaltung einen Gangwechsel in den Ziel-Gang 4.

|            | Gangsprung 1 | Gangsprung 2 | Gangsprung 3 | Gangsprung 4 |
|------------|--------------|--------------|--------------|--------------|
| Ist-Gang 1 | 0,36         | -0,45        | -0,45        | -0,45        |
| Ist-Gang 2 | 1,36         | -0,45        | -0,45        | -0,45        |
| Ist-Gang 3 | 0,50         | -0,45        | -0,45        | -0,45        |
| Ist-Gang 4 | -0,01        | -0,10        | -0,20        | -0,20        |
| Ist-Gang 5 | -0,25        | -0,41        | -0,41        | -0,45        |
| Ist-Gang 6 | -0,36        | -0,45        | -0,45        | -0,45        |
| Ist-Gang 7 | -0,36        | -0,45        | -0,45        | -0,45        |
| Ist-Gang 8 | -0,36        | -0,45        | -0,45        | -0,45        |

In der obigen Tabelle sind für alle acht möglichen Ist-Gänge und für die jeweils zulässigen Gangsprünge Grenzwerte für Beschleunigungen oder Verzögerungen des dem jeweiligen Ist-Gang und dem jeweiligen Gangsprung entsprechenden Ziel-Gangs hinterlegt. Bei diesen Grenzwerten für eine Beschleunigung bzw. Verzögerung handelt es sich um Grenzwerte, die im Falle von Zugrückschaltungen zum Einsatz kommen. Für Schubrückschaltungen, Schubhochschaltungen oder Zughochschaltungen sind individuelle Grenzwerte für Beschleunigungen und Verzögerungen hinterlegt. In der obigen Tabelle beträgt der Grenzwert für eine Beschleunigung bzw. Verzögerung im Ist-Gang 6 bei einem Gangsprung 2 für den entsprechenden Ziel-Gang 4 "-0,45". Der Grenzwert für die Verzögerung bzw. Beschleunigung im Ist-Gang 6 beträgt für den Gangsprung 1, also für den entsprechenden Ziel-Gang 5, "-0,45".

Die obigen Grenzwerte für Beschleunigungen und Verzögerungen der den jeweiligen Ist-Gängen und den jeweiligen Gangsprüngen entsprechenden Ziel-Gänge sind in einer Getriebesteuerungseinrichtung des Getriebes 2 hinterlegt.

Um nun einen Gangsprung, nämlich die Größe eines Gangsprungs von einem Ist-Gang in einen Ziel-Gang zu ermitteln, wird für den aktuellen Ist-Gang ausgehend vom jeweils kleinsten Gangsprung in einer Schleife unter sukzessiver Erhöhung des Gangsprungs abhängig von der aktuellen Fahrsituation des Kraftfahrzeugs und abhängig von Kenngrößen desselben die sich unter Verwendung des jeweiligen Gangsprungs im jeweiligen Ziel-Gang theoretisch einstellende Beschleunigung oder Verzögerung ermittelt, wobei diese sich theoretisch einstellende Beschleunigung oder Verzögerung mit dem jeweiligen hinterlegten Grenzwert verglichen wird, nämlich innerhalb der Schleife so lange, bis die sich beim jeweiligen Gangsprung theoretisch einstellende Beschleunigung oder Verzögerung den für denselben hinterlegten Grenzwert nicht mehr verletzt, wobei dann dieser Gangsprung für eine Schaltung ausgewählt und bei Erreichen einer Schaltdrehzahl verwendet wird.

Auf die konkrete Ermittlung der sich unter Verwendung des jeweiligen Gangsprungs im jeweiligen Ziel-Gang theoretisch einstellende Beschleunigung und Verzögerung wird nachfolgend im Detail eingegangen.

So wird die sich ausgehend von einem aktuell eingelegten Ist-Gang unter Verwendung des jeweiligen Gangsprungs im jeweiligen Ziel-Gang theoretisch einstellende Beschleunigung oder theoretisch einstellende Verzögerung $a_{ZG}$ unter Verwendung der folgenden Formel errechnet:

$$a_{ZG} = \frac{F_{ZG} - F_{FW}}{m}$$

wobei $F_{ZG}$ eine für den Ziel-Gang berechnete Zugkraft oder Schubkraft ist, wobei $F_{FW}$ der aktuelle Fahrwiderstand des Kraftfahrzeugs ist, und wobei m die aktuelle Masse des Kraftfahrzeugs ist.

Der Fahrwiderstand $F_{FW}$ des Kraftfahrzeugs kann messtechnisch oder rechnerisch ermittelt werden.

Verfügt ein Kraftfahrzeug zum Beispiel über einen Neigungssensor, so kann der Fahrwiderstand einer aktuell befahrenen Steigung oder eines aktuell befahrenen Gefälles messtechnisch ermittelt werden. Ist kein Neigungssensor im Kraftfahrzeug verbaut, so kann der Fahrwiderstand auch rechnerisch bestimmt werden.

Bei der Fahrzeugmasse m des Kraftfahrzeugs kann es sich um eine fest vorgegebene Fahrzeugmasse oder im Falle eines Nutzfahrzeugs um eine rechnerisch ermittelte Fahrzeugmasse handeln.

Die zur Berechnung der sich ausgehend vom Ist-Gang unter Verwendung des jeweiligen Gangsprungs im jeweiligen Ziel-Gang theoretisch einstellenden Beschleunigung oder theoretisch einstellenden Verzögerung benötigte Zugkraft $F_{ZG}$ des Ziel-Gangs erfolgt vorzugsweise derart, dass die Zugkraft oder Schubkraft des Ziel-Gangs des jeweiligen Gangsprungs aus einem maximal verfügbaren Zugmoment des Antriebsaggregats oder einem maximal verfügbaren Schubmoment des Antriebsaggregats und/oder eines Retarders des Kraftfahrzeugs berechnet wird.

Hierbei werden vorzugsweise auch die Übersetzung des Ziel-Gangs des jeweiligen Gangsprungs, eine Achsübersetzung des Kraftfahrzeugs und ein dynamischer Reifenradius des Kraftfahrzeugs berücksichtigt.

Die im Ziel-Gang eines Gangsprungs verfügbare Zugkraft oder Schubkraft wird demzufolge abhängig von der Übersetzung des Ziel-Gangs, abhängig von der Achsübersetzung des Kraftfahrzeugs, abhängig vom dynamischen Reifenradius des Kraftfahrzeugs, abhängig vom im Ziel-Gang maximal verfügbaren Zugmoment bzw. Schubmoment sowie vorzugsweise abhängig von bekannten Verlusten, so zum Beispiel bekannten Reibverlusten des Antriebsaggregats, ermittelt.

Das in einem ausgehend von einem Ist-Gang unter Verwendung des jeweiligen Gangsprungs im jeweiligen Ziel-Gang maximal verfügbare Zugmoment des Antriebsaggregats oder das maximal verfügbare Schubmoment des Antriebsaggregats wird vorzugsweise abhängig von einer Ziel-Drehzahl des Ziel-Gangs des jeweiligen Gangsprungs und abhängig von einer Kennlinie des Antriebsaggregats ermittelt, nämlich abhängig von einer Zuglastkennlinie oder Schublastkennlinie, wobei die Zuglastkennlinie auch als Motorvolllastkennlinie bezeichnet wird.

Die Ziel-Drehzahl des Ziel-Gangs des jeweiligen Gangsprungs wird aus einer aktuellen Drehzahl des Antriebsaggregats, aus einer Übersetzung des Ist-Gangs, aus dem jeweiligen Gangsprung und aus einem Drehzahlverlust des Antriebsaggregats während der auszuführenden Schaltung berechnet, wobei dieser Drehzahlverlust von einer Schaltstrategie der Getriebesteuerungseinrichtung typischerweise als berechnete Größe zur Verfügung gestellt wird.

Abhängig von einer aktuellen Motordrehzahl des aktuellen Ist-Gangs, der Übersetzung des aktuellen Ist-Gangs, einem Gangsprung und einem Drehzahlverlust während einer Schaltung kann demnach eine Ziel-Drehzahl des Ziel-Gangs der auszuführenden Schaltung berechnet werden, wobei aus der Ziel-Drehzahl des Ziel-Gangs und einer Kennlinie des Antriebsaggregats ein vom Antriebsaggregat maximal bereitstellbares Zugmoment oder auch Schubmoment ermittelt wird. Abhängig aus dem maximal bereitstellbaren Motormoment, abhängig von bekannten Motorverlusten, abhängig von der Übersetzung des Gangsprungs, abhängig von der Hinterachsübersetzung und abhängig von einem dynamischen Reifenradius lässt sich die in einem Ziel-Gang bereitstellbare Zugkraft bzw. Schubkraft bestimmen. Diese Zugkraft bzw. Schubkraft im Ziel-Gang wird einem Fahrwiderstand des Kraftfahrzeugs und einer Masse desselben verrechnet, um die sich ausgehend von einem Ist-Gang unter Verwendung des jeweiligen Gangsprungs im jeweiligen Ziel-Gang theoretisch einstellenden Beschleunigung oder theoretisch einstellende Verzögerung zu berechnen. Die sich theoretisch einstellende Verzögerung bzw. Beschleunigung wird mit dem entsprechend hinterlegten Grenzwert verglichen, wobei dann, wenn dieser Grenzwert von der sich theoretisch einstellenden Beschleunigung oder Verzögerung verletzt wird, der jeweilige Gangsprung verworfen wird und die Berechnung mit einem nächsthöheren Gangsprung erneut ausgeführt wird, nämlich sukzessive im Sinne einer Schleife, bis die sich theoretisch einstellende Beschleunigung oder Verzögerung den entsprechend hinterlegten Grenzwert nicht mehr verletzt. Dieser Gangsprung wird dann für eine Schaltung ausgewählt und bei Erreichen der Schaltdrehzahl verwendet.

In einem konkreten Ausführungsbeispiel soll davon ausgegangen werden, dass ein Kraftfahrzeugs aktuell im Ist-Gang 6 betrieben wird, wobei der aktuelle Fahrwiderstand 45.000 N beträgt. Weiterhin soll davon ausgegangen werden, dass die aktuelle Fahrzeugmasse 40.000 kg beträgt und dass als Zugkraft im Gangsprung 1 im entsprechenden Ziel-Gang 5 20.000 N zur Verfügung stehen. Beim Gangsprung 1 würde sich so eine theoretisch einstellende Verzögerung von -0,625 einstellen, wobei diese Beschleunigung den hinterlegten Grenzwert von -0,36 unterschreitet und demnach verletzt.

Daher wird der Gangsprung 1 verworfen. Ferner wird unter sukzessiver Erhöhung des Gangsprungs, also mit dem Gangsprung 2, die sich theoretisch einstellende Beschleunigung erneut ermittelt, wobei unter Annahme, dass für den Gangsprung 2 im entsprechenden Ziel-Gang 4 eine Zugkraft von 30.000 N zur Verfügung steht, sich für den Ziel-Gang 10 eine theoretische Verzögerung von -0,375 ergibt, wobei diese theoretische Verzögerung größer als der entsprechende Grenzwert von -0,45 ist und demnach den Grenzwert nicht verletzt. Daher würde in diesem Fall ausgehend vom Ist-Gang 6 ein Gangsprung 2 und demnach der Ziel-Gang 4 für eine Zugrückschaltung gewählt, die dann ausgeführt würde, wenn die entsprechende Drehzahl der Zugrückschaltung erreicht ist.

Da beim erfindungsgemäßen Verfahren die Auswahl von Gangsprüngen auf Basis hinterlegter Grenzwerte für Beschleunigungen und Verzögerung unter Berücksichtigung eines vom Antriebsaggregat 1 maximal bereitstellbaren Motormoments erfolgt, können die in der Steuerungseinrichtung hinterlegten Grenzwerte für die Verzögerungen bzw. Beschleunigungen ohne Neuabstimmung für unterschiedliche Antriebsaggregate unterschiedlicher Motorleistungen verwendet werden.

Abhängig von den konkret ausgewählten Grenzen für Verzögerungen und Beschleunigungen kann bei Ausführung von Schaltungen, so zum Beispiel bei Ausführung von Zugrückschaltungen, auch nach Ausführung einer Schaltung das Kraftfahrzeug weiter verzögern, was unter Umständen gewollt sein kann. Alternativ kann nach Ausführung einer Schaltung ein Zugkraftüberschuss verfügbar sein, um in den Gängen eine Beschleunigung zu ermöglichen.

Bezugszeichen

1 Antriebsaggregat

2 Getriebe

3 Abtrieb

4 Kupplung

**Patentansprüche**

1. Verfahren zur Bestimmung eines Gangsprungs für eine Schaltung eines mehrgängigen, automatischen bzw. automatisierten Schaltgetriebes eines Kraftfahrzeugs, nämlich zur Bestimmung der Größe eines Gangsprungs von einem Ist-Gang in einen Ziel-Gang, mit folgenden Schritten:

    a) für jeden Ist-Gang und für jeden möglichen Gangsprung des jeweiligen Ist-Gangs wird ein Grenzwert einer Beschleunigung oder einer Verzögerung des dem jeweiligen Ist-Gang und dem jeweiligen Gangsprung entsprechenden Ziel-Gangs hinterlegt;

b) für den aktuellen Ist-Gang wird ausgehend vom kleinsten Gangsprung in einer Schleife unter sukzessiver Erhöhung des Gangsprungs abhängig von der aktuellen Fahrsituation des Kraftfahrzeugs und abhängig von Kenngrößen des Kraftfahrzeugs die sich unter Verwendung des jeweiligen Gangsprungs im jeweiligen Ziel-Gang theoretisch einstellende Beschleunigung oder Verzögerung ermittelt und mit dem jeweiligen hinterlegten Grenzwert verglichen, und zwar solange, bis die sich beim jeweiligen Gangsprung theoretisch einstellende Beschleunigung oder Verzögerung den für denselben hinterlegten Grenzwert nicht mehr verletzt, wobei dann dieser Gangsprung für eine Schaltung ausgewählt wird.

2. Verfahren nach Anspruch 1, **dadurch gekennzeichnet, dass** die sich ausgehend vom Ist-Gang unter Verwendung des jeweiligen Gangsprungs im jeweiligen Ziel-Gang theoretisch einstellende Beschleunigung oder theoretisch einstellende Verzögerung aus einer berechneten Zugkraft oder berechneten Schubkraft des Ziel-Gangs des jeweiligen Gangsprungs, aus einem aktuellen Fahrwiderstand des Kraftfahrzeugs und einer aktuellen Masse des Kraftfahrzeugs errechnet wird.

3. Verfahren nach Anspruch 2, **dadurch gekennzeichnet, dass** die Zugkraft oder Schubkraft des Ziel-Gangs des jeweiligen Gangsprungs aus einem maximal verfügbaren Zugmoment eines Antriebsaggregats oder einem maximal verfügbaren Schubmoment des Antriebsaggregats und/oder eines Retarders errechnet wird.

4. Verfahren nach Anspruch 3, **dadurch gekennzeichnet, dass** hierbei auch eine Übersetzung des Ziel-Gangs des jeweiligen Gangsprungs und eine Achsübersetzung des Kraftfahrzeugs und ein Reifenradius des Kraftfahrzeugs berücksichtigt werden.

5. Verfahren nach Anspruch 3 oder 4, **dadurch gekennzeichnet, dass** das maximal verfügbare Zugmoment eines Antriebsaggregats oder das maximal verfügbare Schubmoment des Antriebsaggregats abhängig von einer Ziel-Drehzahl des Ziel-Gangs des jeweiligen Gangsprungs und abhängig von einer Zuglastkennlinie oder Schublastkennlinie des Antriebsaggregats ermittelt wird.

6. Verfahren nach Anspruch 5, **dadurch gekennzeichnet, dass** die Ziel-Drehzahl des Ziel-Gangs des jeweiligen Gangsprungs aus einer aktuellen Drehzahl des Antriebsaggregats im Ist-Gang, aus einer Übersetzung des Ist-Gangs, aus dem jeweiligen Gangsprung und einem berechneten Drehzahlverlust während der Schaltung errechnet wird.

7. Verfahren nach einem der Ansprüche 2 bis 6, **dadurch gekennzeichnet, dass** der aktuelle Fahrwiderstand des Kraftfahrzeugs aus einem Gefälle oder aus einer Steigung, in welchem oder in welcher das Kraftfahrzeug betrieben wird, bestimmt wird.

8. Verfahren nach einem der Ansprüche 2 bis 7, **dadurch gekennzeichnet, dass** der aktuelle Fahrwiderstand des Kraftfahrzeugs gemessen oder errechnet wird.

9. Verfahren nach einem der Ansprüche 2 bis 7, **dadurch gekennzeichnet, dass** die aktuelle Masse des Kraftfahrzeugs errechnet wird.

10. Verfahren nach einem der Ansprüche 1 bis 9, **dadurch gekennzeichnet, dass** ein Gangsprung für eine Zugrückschaltung eines in einer Steigung betrieben Kraftfahrzeugs ermittelt wird, wobei der Grenzwert einer Beschleunigung oder einer Verzögerung des dem jeweiligen Ist-Gang und dem jeweiligen Gangsprung entsprechenden Ziel-Gangs dann verletzt wird, wenn die sich unter Verwendung des jeweiligen Gangsprungs im jeweiligen Ziel-Gang theoretisch einstellende Beschleunigung oder Verzögerung unterhalb des Grenzwerts liegt.

**Claims**

1. Method for determining a gear jump for a shift of a multi-gear automatic or automated gearbox of a motor vehicle, specifically for determining the size of a gear jump from an actual gear to a target gear, having the following steps:

a) a limiting value of an acceleration or a deceleration of the target gear corresponding to the respective actual gear and the respective gear jump is stored for each actual and for each possible gear jump of the respective actual gear;
b) for the current actual gear the acceleration or deceleration which theoretically occurs when the respective gear jump is used in the respective target gear is determined starting from the smallest gear jump in a loop by successively increasing the gear jump as a function of the current driving situation of the motor vehicle and as a function of characteristic variables of the motor vehicle, and said acceleration or deceleration is compared with the respective stored limiting value, specifically until the acceleration or deceleration which theoretically occurs at the respective gear jump no longer infringes the limiting value stored for the same, wherein this gear jump is then selected for a shift.

2. Method according to Claim 1, **characterized in that** the acceleration or deceleration which theoretically occurs starting from the actual gear when the respective gear jump is used in the respective target gear is calculated from a calculated tractive force or calculated thrust force of the target gear of the respective gear jump, from a current driving resistance of the motor vehicle and from a current mass of the motor vehicle.

3. Method according to Claim 2, **characterized in that** the tractive force or thrust force of the target gear of the respective gear jump is calculated from a maximum available tractive moment of a drive assembly or a maximum available thrust moment of the drive assembly and/or of a retarder.

4. Method according to Claim 3, **characterized in that** a transmission ratio of the target gear of the respective gear jump and an axle drive ratio of the motor vehicle and a tyre radius of the motor vehicle are also taken into account here.

5. Method according to Claim 3 or 4, **characterized in that** the maximum available tractive moment of a drive assembly or the maximum available thrust moment of the drive assembly is determined as a function of a target rotational speed of the target gear of the respective gear jump and as a function of a tensile load characteristic curve or thrust load characteristic curve of the drive assembly.

6. Method according to Claim 5, **characterized in that** the target rotational speed of the target gear of the respective gear jump is calculated from a current rotational speed of the drive assembly in the actual gear, from a transmission ratio of the actual gear, from the respective gear jump and from a calculated rotational speed loss during the shift.

7. Method according to one of Claims 2 to 6, **characterized in that** the current driving resistance of the motor vehicle is determined from a negative gradient or from a positive gradient on which the motor vehicle is being operated.

8. Method according to one of Claims 2 to 7, **characterized in that** the current driving resistance of the motor vehicle is measured or calculated.

9. Method according to one of Claims 2 to 7, **characterized in that** the current mass of the motor vehicle is calculated.

10. Method according to one of Claims 1 to 9, **characterized in that** a gear jump for a traction shifting back operation of a motor vehicle operated on a positive gradient is determined, wherein the limiting value of an acceleration or a deceleration of the target gear which corresponds to the respective actual gear and the respective gear jump is infringed only when the acceleration or deceleration which theoretically stored for the same occurs when the respective gear jump is used in the respective target gear is below the limiting value.

## Revendications

1. Procédé pour déterminer un saut de rapport pour un changement de vitesse d'une boîte de vitesses à plusieurs rapports, automatique ou automatisée, d'un véhicule automobile, à savoir pour déterminer l'ampleur d'un saut de rapport depuis un rapport présent jusqu'à un rapport cible, comprenant les étapes suivantes :

   a) pour chaque rapport présent et pour chaque saut de rapport possible du rapport présent respectif, une valeur limite d'une accélération ou d'une décélération du rapport cible correspondant au rapport présent respectif et au saut de rapport respectif est consignée ;
   b) pour le rapport présent actuel, à partir du saut de rapport le plus petit dans une boucle, par augmentation successive du saut de rapport en fonction de la situation de conduite actuelle du véhicule automobile et en fonction de valeurs caractéristiques du véhicule automobile, l'accélération ou la décélération s'ajustant théoriquement en utilisant le saut de rapport respectif dans le rapport cible respectif est déterminée et est comparée avec la valeur limite consignée respective, et ce jusqu'à ce que l'accélération ou la décélération s'ajustant théoriquement lors du saut de rapport respectif ne dépasse plus la valeur limite consignée pour celui-ci, ce saut de rapport étant alors sélectionné pour un changement de vitesse.

2.  Procédé selon la revendication 1, **caractérisé en ce que** l'accélération s'ajustant théoriquement ou la décélération s'ajustant théoriquement à partir du rapport présent en utilisant le saut de rapport respectif dans le rapport cible respectif est calculée à partir d'une force de traction calculée ou d'une force de poussée calculée du rapport cible du saut de rapport respectif, à partir d'une résistance de conduite actuelle du véhicule automobile et d'une masse actuelle du véhicule automobile.

3.  Procédé selon la revendication 2, **caractérisé en ce que** la force de traction ou la force de poussée du rapport cible du saut de rapport respectif est calculée à partir d'un couple de traction maximal disponible d'un groupe motopropulseur ou d'un couple de poussée maximal disponible du groupe motopropulseur et/ou d'un ralentisseur.

4.  Procédé selon la revendication 3, **caractérisé en ce que** dans ce cas, également une démultiplication du rapport cible du saut de rapport respectif et une démultiplication d'essieu du véhicule automobile ainsi qu'un rayon du pneu du véhicule automobile sont pris en compte.

5.  Procédé selon la revendication 3 ou 4, **caractérisé en ce que** le couple de traction maximal disponible d'un groupe motopropulseur ou le couple de poussée maximal disponible du groupe motopropulseur est déterminé en fonction d'un régime cible du rapport cible du saut de rapport respectif et en fonction d'une courbe caractéristique de charge de traction ou d'une courbe caractéristique de charge de poussée du groupe motopropulseur.

6.  Procédé selon la revendication 5, **caractérisé en ce que** le régime cible du rapport cible du saut de rapport respectif est calculé à partir d'un régime actuel du groupe motopropulseur dans le rapport présent, à partir d'une démultiplication du rapport présent, à partir du saut de rapport respectif et d'une perte de régime calculée pendant le changement de vitesse.

7.  Procédé selon l'une quelconque des revendications 2 à 6, **caractérisé en ce que** la résistance de conduite actuelle du véhicule automobile est déterminée à partir d'une descente ou d'une montée, sur laquelle le véhicule automobile est conduit.

8.  Procédé selon l'une quelconque des revendications 2 à 7, **caractérisé en ce que** la résistance de conduite actuelle du véhicule automobile est mesurée ou calculée.

9.  Procédé selon l'une quelconque des revendications 2 à 7, **caractérisé en ce que** la masse actuelle du véhicule automobile est calculée.

10. Procédé selon l'une quelconque des revendications 1 à 9, **caractérisé en ce qu'**un saut de rapport pour un rétrogradage en traction d'un véhicule automobile fonctionnant en montée est déterminé, la valeur limite d'une accélération ou d'une décélération du rapport cible correspondant au rapport présent respectif et au saut de rapport respectif étant alors dépassée si l'accélération ou la décélération s'ajustant théoriquement en utilisant le saut de rapport respectif dans le rapport cible respectif est située en dessous de la valeur limite.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6272415 B
- DE 102005052824 A1